(19) Europäisches Patentamt
European Patent Office
Office européen des brevets

(11) **EP 3 648 391 B1**

(12) **EUROPEAN PATENT SPECIFICATION**

(45) Date of publication and mention
of the grant of the patent:
**04.08.2021 Bulletin 2021/31**

(51) Int Cl.:
***H04L 5/00*** *(2006.01)*

(21) Application number: **18918413.8**

(22) Date of filing: **19.09.2018**

(86) International application number:
**PCT/CN2018/106520**

(87) International publication number:
**WO 2020/056632 (26.03.2020 Gazette 2020/13)**

(54) **INFORMATION TRANSMISSION METHOD AND DEVICE**

INFORMATIONSÜBERTRAGUNGSVERFAHREN UND -VORRICHTUNG

PROCÉDÉ ET DISPOSITIF DE TRANSMISSION D'INFORMATIONS

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**06.05.2020 Bulletin 2020/19**

(73) Proprietor: **GUANGDONG OPPO MOBILE
TELECOMMUNICATIONS
CORP., LTD.
Wusha, Chang'an Town
Dongguan,
Guangdong 523860 (CN)**

(72) Inventor: **Lin, Yanan
Dongguan, Guangdong 523860 (CN)**

(74) Representative: **Manitz Finsterwald
Patent- und Rechtsanwaltspartnerschaft mbB
Martin-Greif-Strasse 1
80336 München (DE)**

(56) References cited:
CN-A- 102 263 620    CN-A- 107 409 016
CN-A- 107 852 718    CN-A- 108 270 539
US-A1- 2017 134 140

• WILUS INC: "Discussion on HARQ-ACK multiplexing for NR", 3GPP DRAFT; R1-1718279_FINAL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Prague, CZ; 20171009 - 20171013 8 October 2017 (2017-10-08), XP051341461, Retrieved from the Internet: URL:http://www.3gpp.org/ftp/Meetings_3GPP_SYNC/RAN1/Docs/ [retrieved on 2017-10-08]
• HUAWEI ET AL: "Discussion on semi-static HARQ-ACK codebook for slot aggregation", 3GPP DRAFT; R1-1803698, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Sanya, China; 20180416 - 20180420 15 April 2018 (2018-04-15), XP051425995, Retrieved from the Internet: URL:http://www.3gpp.org/ftp/Meetings%5F3GPP%5FSYNC/RAN1/Docs/ [retrieved on 2018-04-15]

- LENOVO ET AL: "Remaining issues for CA with different numerologies", 3GPP DRAFT; R1-1806344, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Busan, Korea; 20180521 - 20180525 20 May 2018 (2018-05-20), XP051441549, Retrieved from the Internet: URL:http://www.3gpp.org/ftp/Meetings%5F3GP P%5FSYNC/RAN1/Docs/ [retrieved on 2018-05-20]

## Description

## TECHNICAL FIELD

Embodiments of the present application relate to the field of mobile communication technologies and, in particular, to an information transmission method and apparatus.

## BACKGROUND

In a 5th Generation (5G)-New Radio (NR) system, dynamically indicating feedback timing of feedback response information (briefly as HARQ timing) is supported for a physical downlink shared channel (PDSCH). In addition, the NR system supports multiplexing transmission of the feedback response information (such as ACK/NACK), that is, feedback response information corresponding to multiple PDSCHs is transmitted over one physical uplink control channel (PUCCH).

When a terminal is configured by a network side to dynamically determine the number of bits of the feedback response information, the terminal determines a feedback response information sequence based on a downlink assignment indicator (DAI) information field in Downlink Control Information (DCI). However, according to the current definition of DAI, uplink control overheads will be significantly increased. In some cases, there will also be a misunderstanding between a base station and user equipment (UE) with regard to the number of bits of the feedback response information, which seriously affects system performance.

R1-1718279 discusses DAI mechanism for dynamic HARQ-ACK multiplexing when CBG-based transmission is configured.

R1-1803698 discusses semi-static HARQ-ACK codebook for slot aggregation. R1-1806344 discusses remaining issues for CA with different numerologies.

## SUMMARY

Embodiments of the present application provide an information transmission method and apparatus. The present application is defined in the independent claims.

With the above technical solutions, a new DAI is designed, where the first indication information corresponds to a counter DAI, the second indication information corresponds to a total DAI, the accumulative number indicated by the first indication information is directed to downlink data channels having different data content, similarly, the total number indicated by the second indication information is directed to downlink data channels having different data content, in this way, uplink control overheads can be effectively saved, and the misunderstanding between a base station and a UE with regard to the number of bits of the feedback response information can be avoided.

## BRIEF DESCRIPTION OF DRAWING(S)

Drawings described herein are intended to provide a further understanding of the present application, which constitute a part of the present application. Illustrative embodiments of the present application and descriptions thereof are intended to explain the present application, but do not unduly limit the present application. In the drawings:

FIG. 1 is a schematic diagram of a communication system architecture according to an embodiment of the present application;
FIG. 2 is a schematic diagram 1 of a DAI according to an embodiment of the present application;
FIG. 3 is a schematic diagram 2 of a DAI according to an embodiment of the present application;
FIG. 4 is a schematic flowchart 1 of an information transmission method according to an embodiment of the present application;
FIG. 5 is a schematic diagram 3 of a DAI according to an embodiment of the present application;
FIG. 6 is a schematic flowchart 2 of an information transmission method according to an embodiment of the present application;
FIG. 7 is a schematic structural diagram 1 of an information transmission apparatus according to an embodiment of the present application;
FIG. 8 is a schematic structural diagram 2 of an information transmission apparatus according to an embodiment of the present application;
FIG. 9 is a schematic structural diagram of a communication device according to an embodiment of the present application;
FIG. 10 is a schematic structural diagram of a chip according to an embodiment of the present application; and
FIG. 11 is a schematic block diagram of a communication system according to an embodiment of the present application.

## DESCRIPTION OF EMBODIMENTS

The technical solutions in the embodiments of the present application will be described hereunder with reference to the accompanying drawings in the embodiments of the present application. Obviously, the described embodiments are only a part of embodiments of the present application, rather than all embodiments of the present application. All other embodiments obtained by persons of ordinary skill in the art based on the embodiments of the present application without any creative effort shall fall into the protection scope of the present application.

The technical solutions in the embodiments of the present application can be applied to various communication systems, such as a global system of mobile communication (GSM) system, a code division multiple access (CDMA) system, a wideband code division multiple access (WCDMA) system, a general packet radio service (GPRS), a long term evolution (LTE) system, an LTE frequency division duplex (FDD) system, an LTE time division duplex (TDD) system, a universal mobile telecommunication system (UMTS) or a worldwide interoperability for microwave access (WiMAX) communication system, or a 5G system, etc.

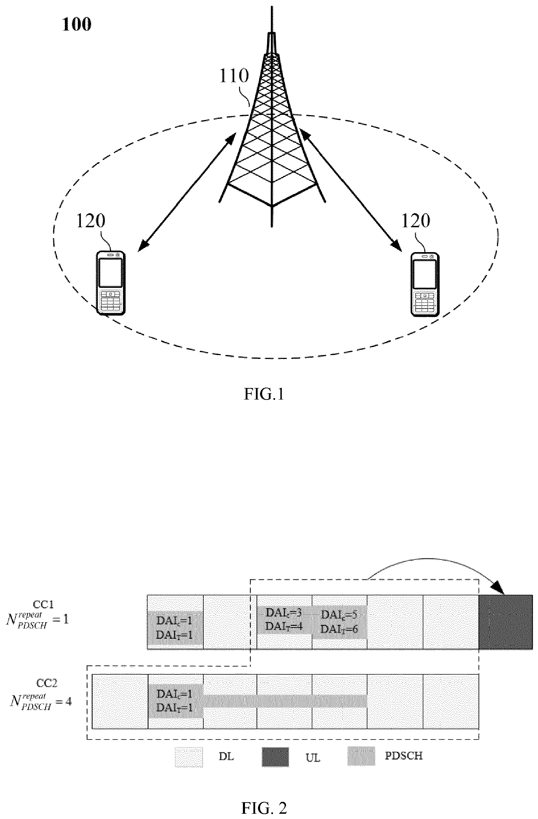

Exemplarily, FIG. 1 shows a communication system 100 applied in an embodiment of the present application. The communication system 100 may include a network device 110. The network device 110 may be a device that communicates with a terminal 120 (or referred to as a communication terminal, a terminal). The network device 110 may provide a particular geographic area with communication coverage and may communicate with a terminal located within the coverage. In an implementation, the network device 110 may be a base station (base transceiver station, BTS) in the GSM system or the CDMA system, or a base station (NodeB, NB) in the WCDMA system, or an evolved base station (evolutional Node B, eNB or eNodeB) in the LTE system, or a wireless controller in a cloud radio access network (CRAN), alternatively, the network device may be a mobile switching center, a relay station, an access point, a vehicle-mounted device, a wearable device, a hub, a switch, a network bridge, a router, a network side device in the 5G network, or a network device in a future evolutional public land mobile network (PLMN), etc.

The communication system 100 also includes at least one terminal 120 located within the coverage of the network device 110. "Terminals" as used herein include, but are not limited to, being connected via a wired line, such as connected via a public switched telephone network (PSTN), a digital subscriber line (DSL), a digital cable, a direct cable; and/or to another data connection/network; and/or via a wireless interface, such as a cellular network, a wireless local area network (WLAN), a digital television network such as a DVB-H network, a satellite network, an AM-FM broadcast transmitter; and/or to a device of another terminal configured to receive/transmit a communication signal; and/or an internet of things (IoT) device. The terminals configured to communicate via the wireless interface may be referred to as "wireless communication terminals", "wireless terminals" or "mobile terminals". Examples of the mobile terminals include, but are not limited to, satellite or cellular phones; personal communications system (PCS) terminals that can combine cellular radio phones with data processing, fax, and data communication capabilities; and may include radio phones, pagers, Internet/Intranet accesses, Web browsers, memos, calendars, and/or PDAs for global positioning system (GPS) receivers; and conventional laptop and/or handheld receivers or other electronic devices including radio phone transceivers. The terminals may refer to access terminals, user equipment (UE), subscriber units, subscriber stations, mobile stations, mobile platforms, remote stations, remote terminals, mobile devices, user terminals, terminals, wireless communication devices, user agents, or user devices. The access terminals may be cellular phones, cordless phones, session initiation protocol (SIP) phones, wireless local loop (WLL) stations, personal digital assistants (PDA), handheld devices with wireless communication functions, computing devices or other processing devices vehicle-mounted devices and wearable devices connected to wireless modems, terminals in the future 5G network, or terminals in the future evolutional PLMN, or the like.

In an implementation, device to device (D2D) communications may be performed between terminals 120.

In an implementation, the 5G system or the 5G network may also be referred to as a new radio (NR) system or an NR network.

FIG. 1 exemplarily shows one network device and two terminals. In an implementation, the communication system 100 may include multiple network devices and other number of terminals may be included within the coverage of each of the network devices, which is not limited in the embodiment of the present application.

In an implementation, the communication system 100 may further include other network entities, such as a network controller, a mobility management entity, which is not limited in the embodiment of the present application.

It should be understood that, in the embodiment of the present application, a device with a communication function in the network/system may be referred to as a communication device. Taking the communication system 100 shown in FIG. 1 as an example, the communication device may include a network device 110 and a terminal 120 having communication functions, while the network device 110 and the terminal 120 may be specific devices described above, and of which the details will not be described herein. The communication device may also include other devices in the communication system 100, for example, other network entities such as a network controller, a mobility management entity and the like, which are not limited in the embodiment of the present application.

It should be understood that the terms such as "system" and "network" herein are typically interchangeable herein. The term "and/or" herein is merely an association between associated objects, which indicates that there may be three relationships, for example, A and/or B may indicate that only A exists, both A and B exist and only B exists. In addition, the character "/" herein generally indicates that contextual associated objects have an "or" relationship.

In order to facilitate the understanding of the technical solutions in the embodiments of the present application, related technologies involved in the embodiments of the present application will be described below.

1. Feedback timing of feedback response information (HARQ timing)

The terminal determines a pre-configured timing set including up to eight values {$K1_0$, $K1_1$, $K1_2$, $K1_3$, $K1_4$, $K1_5$, $K1_6$, $K1_7$}. A DCI schedules that a PDSCH is transmitted in a slot n, and a target information field of 3 bits included in the DCI is used to indicate a value $K1_i$ in the pre-configured set, then the terminal transmits ACK/NACK information corresponding to the PDSCH in a slot $n+K1_i$. The pre-configured timing set corresponding to a DCI format 1_0 is constantly {1, 2, 3, 4, 5, 6, 7, 8}. For DCI format 1_1, values in the pre-configured timing set are configured by a higher layer parameter.

2. Multiplexing transmission of ACK/NACK

ACK/NACK information corresponding to multiple PDSCHs is transmitted over one PUCCH. For multiplexing transmission of ACK/NACK, two ACK/NACK information generation modes are further supported: semi-statically determining the number of ACK/NACK bits (semi-static HARQ-ACK codebook) and dynamically determining the number of ACK/NACK bits (dynamic HARQ-ACK codebook). When it is configured to dynamically determine the number of ACK/NACK bits, the terminal determines a sequence of feedback information based on the DAI information field in the DCI. Further, there arc two types of the DAI, one type is a counter DAI (briefly as $DAI_c$), and the other type is a total DAI (briefly as $DAI_T$). The counter DAI indicates the accumulative number of PDSCHs received on {serving cell, PDCCH monitoring occasion}-pair(s), where the serving cell can also be replaced with a carrier, and the PDCCH monitoring occasion can also be replaced with a time unit. One {serving cell, PDCCH monitoring occasion}-pair represents a target resource unit, on which a PDSCH can be transmitted.

3. Slot aggregation

The NR system supports slot aggregation, that is, one transport block (TB) is repeatedly transmitted in consecutive time units, and the terminal then only supports single code-word transmission. As shown in FIG. 2, the upper row represents time units on a carrier 1 (CC1), where the number of PDSCH that is repeatedly transmitted on the CC1 is 1, that is, $N_{PDSCH}^{repeat} = 1;$ the lower row represents time units on a carrier 2 (CC2), where the number of PDSCHs that are repeatedly transmitted on the CC2 is 4, that is, $N_{PDSCH}^{repeat} = 4.$ According to the definition of DAI described above, the terminal needs to feedback 6 bits of ACK/NACK information in an uplink (UL) time unit, which significantly increases uplink control overheads.

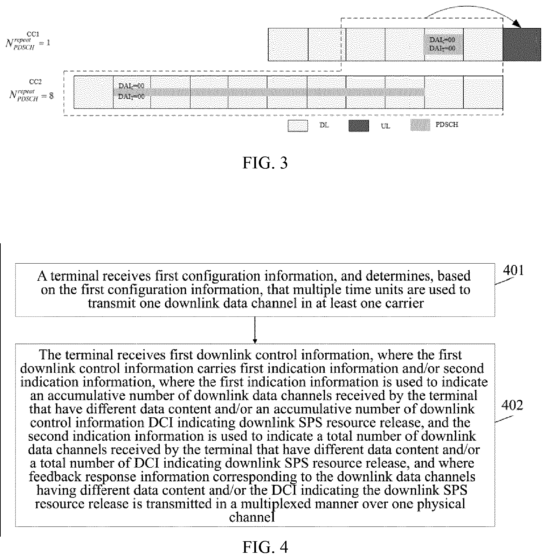

In addition, according to the definition of DAI described above, there may be a misunderstanding between the base station and the UE. As shown in FIG. 3, the upper row represents time units on the carrier 1 (CC1), where the number of PDSCH that is repeatedly transmitted on the CC1 is 1, that is, $N_{PDSCH}^{repeat} = 1;$ the lower row represents time units on the carrier 2 (CC2), where the number of PDSCHs that are repeatedly transmitted on the CC2 is 8, that is, $N_{PDSCH}^{repeat} = 8,$ the DAI information field is 2 bits in length. When the base station has PDSCH scheduling as shown in FIG. 3, the base station expects the UE to feedback 9 bits of information. If the UE does not successfully receive the DCI on the CC2 but only receives the DCI on the CC1, the UE only feeds back 1 bit of information. A similar problem will occur for a transmitting condition that the UE consecutively misses an integer multiple of 4 DCIs when the slot aggregation is not used, but this case has a very low probability. However, when the slot aggregation is used, if one DCI is missed, this problem will occur, which will seriously affect system performance.

FIG. 4 is a schematic flowchart 1 of an information transmission method according to an embodiment of the present application. As shown in FIG. 4, the information transmission method includes the following steps: Step 401: a terminal receives first configuration information, and determines, based on the first configuration information, that multiple time units are used to transmit one downlink data channel in at least one carrier.

In the embodiment of the present application, the terminal may be any device that can communicate with a network, such as a mobile phone, a tablet computer, a vehicle-mounted terminal, a notebook and the like.

In the embodiment of the present application, the terminal may communicate with the network via one carrier and multiple carriers, in further, the terminal receives the first configuration information, and determines, based on the first configuration information, that multiple time units are used to transmit one downlink data channel in at least one carrier.

For example, the network side configures the terminal with two carriers through the first configuration information, which are a CC1 and a CC2, respectively. On the CC1, one time unit is used to transmit one downlink data channel, and description is made by taking an example where the downlink data channel is a PDSCH, $N_{PDSCH}^{repeat} = 1;$ while on the CC2, three time units are used to transmit one downlink data channel, and description is made by taking an example where the downlink data channel is a PDSCH, $N_{PDSCH}^{repeat} = 3.$

In the above example, multiple time units are used to transmit one downlink data channel on one of the two carriers, but the description is not limited thereto. According to requirements, the network side may configure the two carriers so that multiple time units are used to transmit one downlink data channel on both of the two carries.

In the embodiment of the present application, the network side configures one or more carriers so that multiple time units are used to transmit one downlink data channel on the one or more carriers, that is, the carrier(s) is configured as a slot aggregation carrier, on which the terminal uses a slot aggregation mode to transmit the downlink data channel.

Step 402: the terminal receives first downlink control information, where the first downlink control information carries first indication information and/or second indication information, where the first indication information is used to indicate an accumulative number of downlink data channels received by the terminal that have different data content and/or an accumulative number of downlink control information DCI indicating downlink SPS resource release, and the second indication information is used to indicate a total number of downlink data channels received by the terminal that have different data content and/or a total number of DCI indicating downlink SPS resource release, and where feedback response information corresponding to the downlink data channels having different data content and/or the DCI indicating the downlink SPS resource release is transmitted in a multiplexed manner over one physical channel.

According to the invention, the first indication information corresponds to a counter DAI, the second indication information corresponds to a total DAI, the accumulative number indicated by the first indication information is directed to downlink data channels having different data content, similarly, the total number indicated by the second content information is directed to downlink data channels having different data content.

In one example, the first indication information and the second indication information are represented by two bits. According to the invention, different data content may be embodied by TBs or HARQ processes. These two implementations are described separately below.

Mode 1: TB

1) The first indication information is used to indicate an accumulative number of downlink data channels received by the terminal that carry different transport blocks (TBs).
In this case, multiple downlink data channels over which a same TB is transmitted correspond to the same first indication information.
2) The second indication information is used to indicate a total number of downlink data channels received by the terminal that carry different TBs.

In this case, for the total number indicated by the second indication information, multiple downlink data channels over which a same TB is transmitted are counted once.

Mode 2: HARQ process

1) The first indication information is used to indicate an accumulative number of downlink data channels received by the terminal that are corresponding to different hybrid automatic repeat request (HARQ) processes.
In this case, multiple downlink data channels corresponding to a same HARQ process correspond to the same first indication information.
2) The second indication information is used to indicate a total number of downlink data channels received by the terminal that are corresponding to different HARQ processes.

In this case, for the total number indicated by the second indication information, multiple downlink data channels corresponding to a same HARQ process arc counted once.

In the embodiment of the present application, the downlink data channel is transmitted by a target resource unit which is determined by carrier information and downlink channel monitoring occasion information. Further, at least one of carrier information and downlink channel monitoring occasion information corresponding to different downlink data channels is different.

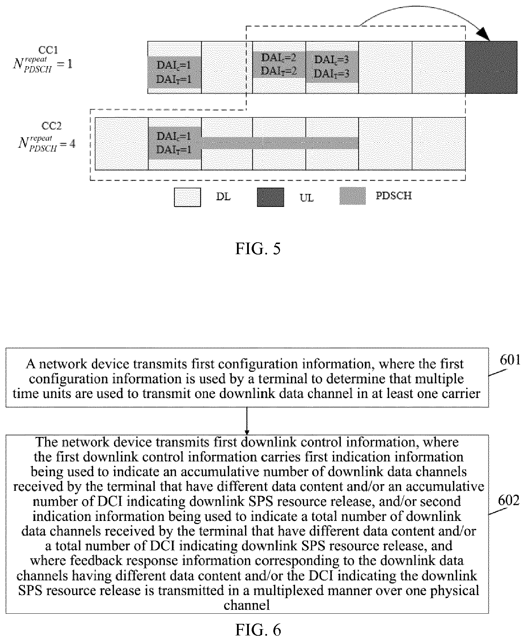

With reference to FIG. 5, the upper row represents time units on a carrier 1 (CC1), where the number of PDSCH that is repeatedly transmitted on the CC1 is 1, that is, $N_{PDSCH}^{repeat} = 1;$ the lower row represents time units on a carrier 2 (CC2), where the number of PDSCHs that are repeatedly transmitted on the CC2 is 4, that is, $N_{PDSCH}^{repeat} = 4.$ According to the definition of DAI in the embodiment of the present application, the terminal needs to feedback 3 bits of ACK/NACK information in an uplink (UL) time unit, where the four identical PDSCHs that are repeatedly transmitted on the CC2 correspond to 1 bit of ACK/NACK information, and uplink control overheads are significantly saved compared to a situation where four identical PDSCHs correspond to 4 bits of ACK/NACK information.

In the solution described above according to the embodiment of the present application, the granularity of the time unit may be a sub-frame, or a slot, or an sTTI, or other fixed time length.

It should be clarified that the first indication information in the embodiment of the present application can be used not only to indicate the accumulative number of downlink data channels received by the terminal that have different data content, but also to indicate the accumulative number of DCI indicating SPS resource release. Similarly, the second indication information in the embodiment of the present application can be used not only to indicate the total number of downlink data channels received by the terminal that have different data content, but also to indicate the total number of DCI indicating SPS resource release.

FIG. 6 is a schematic flowchart 2 of an information transmission method according to an embodiment of the present application. As shown in FIG. 6 , the information transmission method includes the following steps: Step 601: a network device transmits first configuration information, where the first configuration information is used by a terminal to determine that multiple time units are used to transmit one downlink data channel in at least one carrier.

In the embodiment of the present application, the network device may be a base station, such as a gNB in 5G or an eNB in 4G. The network device transmits the first configuration information to the terminal. Here, the terminal may be any device that can communicate with a network, such as a mobile phone, a tablet computer, a vehicle-mounted terminal, a notebook and the like. In the embodiment of the present application, the terminal may communicate with the network via one carrier and multiple carriers.

For example, the network side configures the terminal with two carriers through the first configuration information, which are a CC1 and a CC2, respectively. On the CC1, one time unit is used to transmit one downlink data channel, and description is made by taking an example where the downlink data channel is a PDSCH, $N_{PDSCH}^{repeat} = 1;$ while on the CC2, three time units are used to transmit one downlink data channel, and description is made by taking an example where the downlink data channel is a PDSCH, $N_{PDSCH}^{repeat} = 3$ .

In the above example, multiple time units are used to transmit one downlink data channel on one of the two carriers, but the description is not limited thereto. According to requirements, the network side may configure the two carriers so that multiple time units are used to transmit one downlink data channel on both of the two carries.

In the embodiment of the present application, the network side configures one or more carriers so that multiple time units are used to transmit one downlink data channel on the one or more carriers, that is, the carrier(s) is configured as a slot aggregation carrier, on which the terminal uses a slot aggregation mode to transmit the downlink data channel.

Step 602: the network device transmits first downlink control information, where the first downlink control information carries first indication information and/or second indication information, where the first indication information is used to indicate an accumulative number of downlink data channels received by the terminal that have different data content and/or an accumulative number of DCI indicating downlink SPS resource release, and the second indication information is used to indicate a total number of downlink data channels received by the terminal that have different data content and/or a total number of DCI indicating downlink SPS resource release, and where feedback response information corresponding to the downlink data channels having different data content and/or the DCI indicating the downlink SPS resource release is transmitted in a multiplexed manner over one physical channel.

According to the invention, the first indication information corresponds to a counter DAI, the second indication information corresponds to a total DAI, the accumulative number indicated by the first indication information is directed to downlink data channels having different data content, similarly, the total number indicated by the second indication information is directed to downlink data channels having different data content.

In one example, the first indication information and the second indication information are represented by two bits. According to the invention, different data content may be embodied by TBs or HARQ processes. These two implementations are described separately below.

Mode 1: TB

1) The first indication information is used to indicate an accumulative number of downlink data channels received by the terminal that carry different transport blocks (TBs).
In this case, multiple downlink data channels over which a same TB is transmitted correspond to the same first indication information.
2) The second indication information is used to indicate a total number of downlink data channels received by the terminal that carry different TBs.

In this case, for the total number indicated by the second indication information, multiple downlink data channels over which a same TB is transmitted are counted once.

Mode 2: HARQ process

1) The first indication information is used to indicate an accumulative number of downlink data channels received by the terminal that are corresponding to different hybrid automatic repeat request (HARQ) processes.
In this case, multiple downlink data channels corresponding to a same HARQ process correspond to the same first indication information.

2) The second indication information is used to indicate a total number of downlink data channels received by the terminal that are corresponding to different HARQ processes.

In this case, for the total number indicated by the second indication information, multiple downlink data channels corresponding to a same HARQ process are counted once.

In the embodiment of the present application, the downlink data channel is transmitted by a target resource unit which is determined by carrier information and downlink channel monitoring occasion information. Further, at least one of carrier information and downlink channel monitoring occasion information corresponding to different downlink data channels is different.

With reference to FIG. 5, the upper row represents time units on a carrier 1 (CC1), where the number of PDSCH that is repeatedly transmitted on CC1 is 1, that is, $N_{PDSCH}^{repeat} = 1$; the lower row represents time units on a carrier 2 (CC2), where the number of PDSCHs that are repeatedly transmitted on CC2 is 4, that is, $N_{PDSCH}^{repeat} = 4$. According to the definition of DAI in the embodiment of the present application, the terminal needs to feedback 3 bits of ACK/NACK information in an uplink (UL) time unit, where four identical PDSCHs that are repeatedly transmitted on CC2 correspond to 1 bit of ACK/NACK information, and uplink control overheads are significantly saved compared to a situation where four identical PDSCHs correspond to 4 bits of ACK/NACK information.

In the solution described above according to the embodiment of the present application, the granularity of the time unit may be a sub-frame, or a slot, or an sTTI, or other fixed time length.

It should be clarified that the first indication information in the embodiment of the present application can be used not only to indicate the accumulative number of downlink data channels received by the terminal that have different data content, but also to indicate the accumulative number of DCI indicating SPS resource release. Similarly, the second indication information in the embodiment of the present application can be used not only to indicate the total number of downlink data channels received by the terminal that have different data content, but also to indicate the total number of DCI indicating SPS resource release.

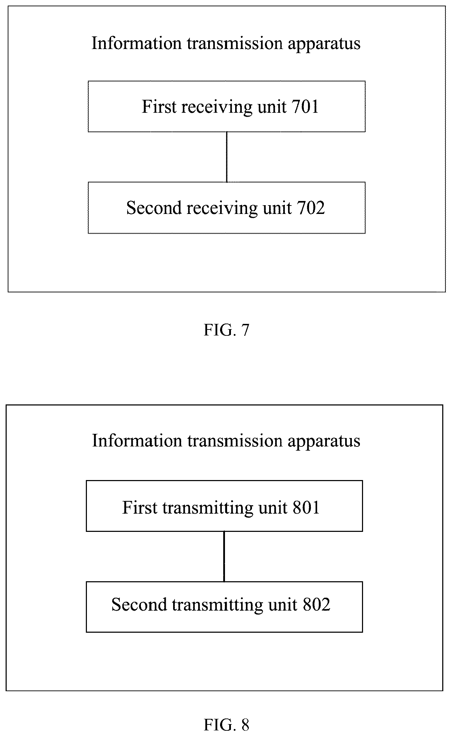

FIG. 7 is a schematic structural diagram 1 of an information transmission apparatus according to an embodiment of the present application. As shown in FIG. 7, the apparatus includes:

a first receiving unit 701, configured to receive first configuration information, and determine, based on the first configuration information, that multiple time units are used to transmit one downlink data channel in at least one carrier; and
a second receiving unit 702, configured to receive first downlink control information, where the first downlink control information carries first indication information and/or second indication information, where the first indication information is used to indicate an accumulative number of downlink data channels received by a terminal that have different data content and/or an accumulative number of DCI indicating downlink SPS resource release, and the second indication information is used to indicate a total number of downlink data channels received by the terminal that have different data content and/or a total number of DCI indicating downlink SPS resource release, and wherein feedback response information corresponding to the downlink data channels having different data content and/or the DCI indicating the downlink SPS resource release is transmitted in a multiplexed manner over one physical channel.

In an implementation, the first indication information being used to indicate an accumulative number of downlink data channels received by the terminal that have different data content includes:
the first indication information is used to indicate an accumulative number of downlink data channels received by the terminal that carry different TBs.

In an implementation, corresponding to the first indication information being used to indicate an accumulative number of downlink data channels received by the terminal that have different data content, multiple downlink data channels over which a same TB is transmitted correspond to the same first indication information.

In an implementation, the second indication information being used to indicate a total number of downlink data channels received by the terminal that have different data content includes:
the second indication information is used to indicate a total number of downlink data channels received by the terminal that carry different TBs.

In an implementation, corresponding to the second indication information being used to indicate a total number of downlink data channels received by the terminal that have different data content, for the total number indicated by the second indication information, multiple downlink data channels over which a same TB is transmitted are counted once.

In an implementation, the first indication information being used to indicate an accumulative number of downlink data channels received by the terminal that have different data content includes:
the first indication information is used to indicate an accumulative number of downlink data channels received by the terminal that are corresponding to different HARQ processes.

In an implementation, corresponding to the first indication information being used to indicate an accumulative number of downlink data channels received by the terminal that have different data content, multiple downlink data channels corresponding to a same HARQ process correspond to the same first indication information.

In an implementation, the second indication information being used to indicate a total number of downlink data channels received by the terminal that have different data content includes:

the second indication information is used to indicate a total number of downlink data channels received by the terminal that are corresponding to different HARQ processes.

In an implementation, corresponding to the second indication information being used to indicate a total number of downlink data channels received by the terminal that have different data content, for the total number indicated by the second indication information, multiple downlink data channels corresponding to a same HARQ process are counted once.

In an implementation, the downlink data channel is transmitted by a target resource unit which is determined by carrier information and downlink channel monitoring occasion information.

In an implementation, at least one of carrier information and downlink channel monitoring occasion information corresponding to different downlink data channels is different.

Persons skilled in the art should understand that, for related description of the information transmission apparatus described above in the embodiment of the present application, reference may be made to related description of the information transmission method in the embodiment of the present application.

FIG. 8 is a schematic structural diagram 2 of an information transmission apparatus according to an embodiment of the present application. As shown in FIG. 8, the apparatus includes:

a first transmitting unit 801, configured to transmit first configuration information, wherein the first configuration information is used by a terminal to determine that multiple time units are used to transmit one downlink data channel in at least one carrier; and

a second transmitting unit 802, configured to transmit first downlink control information, where the first downlink control information carries first indication information and/or second indication information, where the first indication information is used to indicate an accumulative number of downlink data channels received by the terminal that have different data content and/or an accumulative number of DCI indicating downlink SPS resource release, and the second indication information is used to indicate a total number of downlink data channels received by the terminal that have different data content and/or a total number of DCI indicating downlink SPS resource release, and wherein feedback response information corresponding to the downlink data channels having different data content and/or the DCI indicating the downlink SPS resource release is transmitted in a multiplexed manner over one physical channel.

In an implementation, the first indication information being used to indicate an accumulative number of downlink data channels received by the terminal that have different data content includes:

the first indication information is used to indicate an accumulative number of downlink data channels received by the terminal that carry different TBs.

In an implementation, corresponding to the first indication information being used to indicate an accumulative number of downlink data channels received by the terminal that have different data content, multiple downlink data channels over which a same TB is transmitted correspond to the same first indication information.

In an implementation, the second indication information being used to indicate a total number of downlink data channels received by the terminal that have different data content includes:

the second indication information is used to indicate a total number of downlink data channels received by the terminal that carry different TBs.

In an implementation, corresponding to the second indication information being used to indicate a total number of downlink data channels received by the terminal that have different data content, for the total number indicated by the second indication information, multiple downlink data channels over which a same TB is transmitted are counted once.

In an implementation, the first indication information being used to indicate an accumulative number of downlink data channels received by the terminal that have different data content includes:

the first indication information is used to indicate an accumulative number of downlink data channels received by the terminal that are corresponding to different HARQ processes.

In an implementation, corresponding to the first indication information being used to indicate an accumulative number of downlink data channels received by the terminal that have different data content, multiple downlink data channels corresponding to a same HARQ process correspond to the same first indication information.

In an implementation, the second indication information being used to indicate a total number of downlink data channels received by the terminal that have different data content includes:

the second indication information is used to indicate a total number of downlink data channels received by the terminal that are corresponding to different HARQ processes.

In an implementation, corresponding to the second indication information being used to indicate a total number of downlink data channels received by the terminal that have different data content, for the total number indicated by the second indication information, multiple downlink data channels corresponding to a same HARQ process are counted once.

In an implementation, the downlink data channel is transmitted by a target resource unit which is determined by carrier information and downlink channel monitoring occasion information.

In an implementation, at least one of carrier information and downlink channel monitoring occasion information corresponding to different downlink data channels is different.

Persons skilled in the art should understand that, for related description of the information transmission apparatus described above in the embodiment of the present application, reference may be made to related description of the information transmission method in the embodiment of the present application.

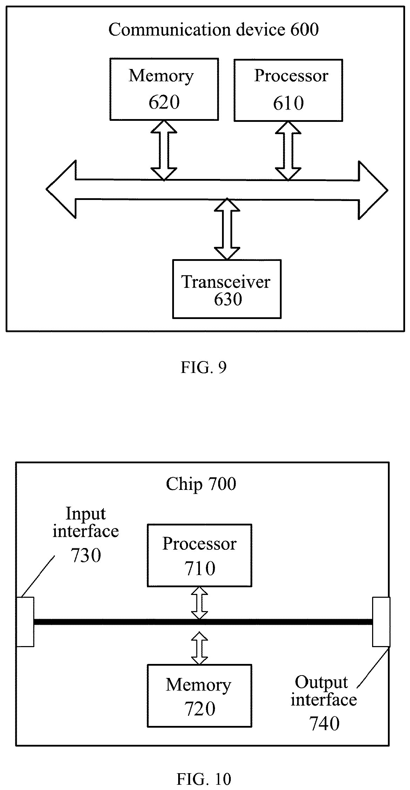

FIG. 9 is a schematic structural diagram of a communication device 600 according to an embodiment of the present application. The communication device may be a terminal or a network device. The communication device 600 shown in FIG. 9 includes a processor 610 which may invoke and run a computer program from a memory to implement the methods in the embodiments of the present application.

In an implementation, as shown in FIG. 9, the communication device 600 may further include a memory 620. The processor 610 may invoke and run a computer program from the memory 620 to implement the methods in the embodiments of the present application.

The memory 620 may be a separate device independent of the processor 610 or may be integrated in the processor 610.

In an implementation, as shown in FIG. 9, the communication device 600 may further include a transceiver 630. The processor 610 may control the transceiver 630 to communicate with other device, in particular, to transmit information or data to other device, or receive information or data transmitted by other device.

The transceiver 630 may include a transmitter and a receiver. The transceiver 630 may further include an antenna, and the number of antennas may be one or more.

In an implementation, the communication device 600 may be specifically the network device in the embodiment of the present application, and the communication device 600 may implement corresponding processes implemented by the network device in the method of the embodiment of the present application. For brevity, details will not be described herein again.

In an implementation, the communication device 600 may be specifically the mobile terminal/the terminal in the embodiment of the present application, and the communication device 600 may implement corresponding processes implemented by the mobile terminal/the terminal in the method of the embodiment of the present application. For brevity, details will not be described herein again.

FIG. 10 is a schematic structural diagram of a chip according to an embodiment of the present application. The chip 700 shown in FIG. 10 includes a processor 710 which may invoke and run a computer program from a memory to implement the method in the embodiment of the present application.

In an implementation, as shown in FIG. 10, the chip 700 may further include a memory 720. The processor 710 may invoke and run a computer program from the memory 720 to implement the method in the embodiment of the present application.

The memory 720 may be a separate device independent of the processor 710 or may be integrated in the processor 710.

In an implementation, the chip 700 may also include an input interface 730. The processor 710 may control the input interface 730 to communicate with other device or chip, in particular, to acquire information or data transmitted by other device or chip.

In an implementation, the chip 700 may further include an output interface 740. The processor 710 may control the output interface 740 to communicate with other device or chip, in particular, to output information or data to other device or chip.

In an implementation, the chip can be applied to the network device in the embodiment of the present application, and the chip may perform corresponding processes implemented by the network device in the method of the embodiment of the present application. For brevity, details will not be described herein again.

In an implementation, the chip can be applied to the mobile terminal/the terminal in the embodiment of the present application, and the chip may perform corresponding processes implemented by the mobile terminal/the terminal in the method of the embodiment of the present application. For brevity, details will not be described herein again.

It should be understood that the chip mentioned in the embodiment of the present application may also be referred to as a system level chip, a system chip, a chip system or a system-on-chip.

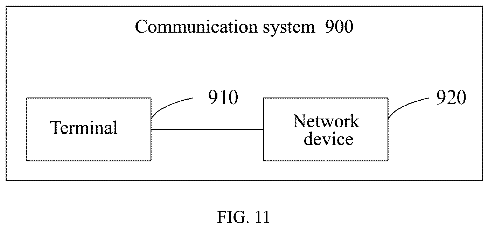

FIG. 11 is a schematic block diagram of a communication system 900 according to an embodiment of the present application. As shown in FIG. 11, the communication system 900 includes a terminal 910 and a network device 920.

The terminal 910 may be configured to implement corresponding functions implemented by the terminal in the foregoing method; moreover, the network device 920 may be configured to implement corresponding functions implemented by the network device in the foregoing method. For brevity, details will not be described herein again.

It should be understood that the processor in the embodiment of the present application may be an integrated circuit chip with signal processing capabilities. During implementations, each step of the foregoing method embodiments may be achieved by an integrated logic circuit of hardware in the processor or an instruction in a form of software. The above processor may be a general purpose processor, a digital signal processor (DSP), an application specific integrated circuit (ASIC), a field programmable gate array (FPGA) or other programmable logic device, discrete gate transistor logic device, or discrete hardware component. The methods, steps, and logical block diagrams disclosed in the embodiments of the present application may be implemented or performed. The general purpose processor may be a microprocessor; alternatively, the processor may also be any conventional processor or the like. The steps of the methods disclosed in the embodiments of the present application may be directly implemented by a hardware decoding processor, or may be performed by a combination of hardware and software modules in the decoding processor. The software module may be located in a storage medium mature in the art, such as a random access memory, a flash memory, a read only memory, a programmable read only memory, an electrically erasable programmable memory, a register, or the like. The storage medium is located in the memory. The processor reads information in the memory and performs the steps of the above methods in combination with its hardware.

It can be understood that the memory in the embodiment of the present application may be a volatile memory or a non-volatile memory, or may include both the volatile memory and the non-volatile memory. The non-volatile memory may be a read-only memory (ROM), a programmable ROM (PROM), or an erasable PROM (EPROM), an electrically EPROM (EEPROM) or a flash memory. The volatile memory may be a random access memory (RAM), which is used as an external cache. By way of exemplary but not restrictive illustration, many forms of RAMs can be used, such as a static RAM (SRAM), a dynamic RAM (DRAM), a synchronous DRAM (SDRAM), a double data rate SDRAM (DDR SDRAM), an enhanced SDRAM (ESDRAM), a synchlink DRAM (SLDRAM) and a direct rambus RAM (DR RAM). It should be noted that the memory in the system and method described herein is intended to include, but are not limited to these and any other suitable types of memories.

It should be understood that the foregoing memory is exemplary but not restrictive illustration. For example, the memory in the embodiment of the present application may also be a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM) and a Direct Rambus RAM (DR RAM). That is, the memory in the embodiment of the present application is intended to include, but is not limited to these and any other suitable types of memories.

An embodiment of the present application further provides a computer readable storage medium which is configured to store a computer program.

In an implementation, the computer readable storage medium can be applied to the network device in the embodiment of the present application, and the computer program causes a computer to perform corresponding processes implemented by the network device in the method of the embodiment of the present application. For brevity, details will not be described herein again.

In an implementation, the computer readable storage medium can be applied to the mobile terminal/the terminal in the embodiment of the present application, and the computer program causes a computer to perform corresponding processes implemented by the mobile terminal/the terminal in the method of the embodiment of the present application. For brevity, details will not be described herein again.

An embodiment of the present application further provides a computer program product including a computer program instruction.

In an implementation, the computer program product can be applied to the network device in the embodiment of the present application, and the computer program instruction causes a computer to perform corresponding processes implemented by the network device in the method of the embodiment of the present application. For brevity, details will not be described herein again.

In an implementation, the computer program product can be applied to the mobile terminal/the terminal in the embodiment of the present application, and the computer program instruction causes a computer to perform corresponding processes implemented by the mobile terminal/the terminal in the method of the embodiment of the present application. For brevity, details will not be described herein again.

An embodiment of the present application further provides a computer program.

In an implementation, the computer program can be applied to the network device in the embodiment of the present application. When running on a computer, the computer program causes the computer to perform corresponding processes implemented by the network device in the method of the embodiment of the present application. For brevity, details will not be described herein again.

In an implementation, the computer program can be applied to the mobile terminal/the terminal in the embodiment of the present application. When running on a computer, the computer program causes the computer to perform corresponding processes implemented by the mobile terminal/the terminal in the method of the embodiment of the present application. For brevity, details will not be described herein again.

It may be known to persons of ordinary skill in the art that, the units and the algorithm steps of each example that are described with reference to the embodiments disclosed herein can be implemented by electronic hardware or a combination of electronic hardware and computer software. Whether these functions are performed by hardware or software depends on specific applications and design constraints of the technical solutions. Persons skilled in the art may implement the described functions by using different methods for each specific application, but such implementation should not be regarded as going beyond the scope of the present application.

It may be clearly understood by a person skilled in the art that, for the purpose of convenient and brief description, reference may be made to the corresponding processes in the foregoing method embodiments for detailed working processes of the foregoing systems, apparatuses, and units, and details will not be described herein again.

In several embodiments provided in the present application, it should be understood that the disclosed systems, apparatuses, and methods may be implemented in other manners. For example, the described apparatus embodiments are merely exemplary. For instance, the division of the units is merely a division of logical functions and there may be other division manners in actual implementations. For instance, multiple units or components may be combined or integrated into another system, or some features may be omitted or not performed. In addition, the presented or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts shown as units may or may not be physical units, that is, may be located in one position, or may be distributed on multiple network units. A part or all of the units may be selected according to actual needs to achieve the objectives of the solutions in the embodiments.

In addition, functional units in the embodiments of the present application may be integrated into one processing unit, or each of the units may exist separately in physical, or two or more units are integrated into one unit.

If implemented in a form of a software functional unit and sold or used as an independent product, the functions may be stored in a computer readable storage medium. Based on such understanding, the technical solutions of the essence of the present application, or the part contributing to the prior art, or a part of the technical solutions may be implemented in a form of a software product. The computer software product is stored in a storage medium, and includes several instructions for enabling a computer device (which may be a personal computer, a server, or a network device, etc.) to perform all or a part of the steps of the methods described in the embodiments of the present application. The foregoing storage medium includes: any medium that can store program codes, such as a USB flash disk, a mobile hard disk, a read-only memory (ROM), a random access memory (RAM), a magnetic disk, or an optical disc, etc.

The above descriptions arc merely specific embodiments of the present application; however, the protection scope of the present application is not limited thereto. Any modification or replacement that may be readily conceived by persons skilled in the art within the technical scope disclosed in the present application should fall into the protection scope as defined by the appended claims.

## Claims

1. An information transmission method, comprising:

> receiving (401), by a terminal, first configuration information, and determining, based on the first configuration information, that multiple time units are used to transmit one downlink data channel in at least one carrier; and
> receiving (402), by the terminal, first downlink control information, wherein the first downlink control information carries first indication information and second indication information, wherein the first indication information corresponding to a counter downlink assignment indicator, DAI, is used to indicate an accumulative number of downlink data channels received by the terminal that have different data content, and the second indication information corresponding to a total DAI is used to indicate a total number of downlink data channels received by the terminal that have different data content;
> transmitting, by the terminal, in a multiplexed manner over one physical channel, feedback response information corresponding to the downlink data channels having different data content, wherein the feedback response information is ACK/NACK;
> wherein the first indication information being used to indicate an accumulative number of downlink data channels received by the terminal that have different data content comprises:
>
>> the first indication information is used to indicate an accumulative number of downlink data channels received by the terminal that carry different transport blocks, TBs, wherein multiple downlink data channels over which a same TB is transmitted correspond to the same first indication information;
>> wherein the second indication information being used to indicate a total number of downlink data channels received by the terminal that have different data content comprises:
>>
>>> the second indication information is used to indicate a total number of downlink data channels received by the terminal that carry different TBs, wherein for the total number indicated by the second indication information, multiple downlink data channels over which a same TB is transmitted are counted once; or
wherein the first indication information being used to indicate an accumulative number of downlink data channels received by the terminal that have different data content comprises:

the first indication information is used to indicate an accumulative number of downlink data channels received by the terminal that are corresponding to different hybrid automatic repeat request, HARQ, processes, wherein multiple downlink data channels corresponding to a same HARQ process correspond to the same first indication information;
wherein the second indication information being used to indicate a total number of downlink data channels received by the terminal that have different data content comprises:
the second indication information is used to indicate a total number of downlink data channels received by the terminal that are corresponding to different HARQ processes, wherein for the total number indicated by the second indication information, multiple downlink data channels corresponding to a same HARQ process are counted once.

2. An information transmission apparatus, comprising:

a first receiving unit (701), configured to receive first configuration information, and determine, based on the first configuration information, that multiple time units are used to transmit one downlink data channel in at least one carrier; and
a second receiving unit (702), configured to receive first downlink control information, wherein the first downlink control information carries first indication information and second indication information, wherein the first indication information corresponding to a counter downlink assignment indicator, DAI, is used to indicate an accumulative number of downlink data channels received by a terminal that have different data content, and the second indication information corresponding to a total DAI is used to indicate a total number of downlink data channels received by the terminal that have different data content, and wherein feedback response information corresponding to the downlink data channels having different data content is transmitted in a multiplexed manner over one physical channel, wherein the feedback response information is ACK/NACK;
wherein the first indication information being used to indicate an accumulative number of downlink data channels received by the terminal that have different data content comprises:

the first indication information is used to indicate an accumulative number of downlink data channels received by the terminal that carry different transport blocks, TBs, wherein multiple downlink data channels over which a same TB is transmitted correspond to the same first indication information;
wherein the second indication information being used to indicate a total number of downlink data channels received by the terminal that have different data content comprises:

the second indication information is used to indicate a total number of downlink data channels received by the terminal that carry different TBs, wherein for the total number indicated by the second indication information, multiple downlink data channels over which a same TB is transmitted are counted once; or
wherein the first indication information being used to indicate an accumulative number of downlink data channels received by the terminal that have different data content comprises:

the first indication information is used to indicate an accumulative number of downlink data channels received by the terminal that are corresponding to different hybrid automatic repeat request, HARQ, processes, wherein multiple downlink data channels corresponding to a same HARQ process correspond to the same first indication information;
wherein the second indication information being used to indicate a total number of downlink data channels received by the terminal that have different data content comprises:

the second indication information is used to indicate a total number of downlink data channels received by the terminal that are corresponding to different HARQ processes, wherein for the total number indicated by the second indication information, multiple downlink data channels corresponding to a same HARQ process are counted once.

3. The apparatus according to claim 2, wherein the downlink data channel is transmitted by a target resource unit which is determined by carrier information and downlink channel monitoring occasion information.

4. The apparatus according to claim 3, wherein at least one of carrier information and downlink channel monitoring occasion information corresponding to different downlink data channels is different.

**Patentansprüche**

1. Informationsübertragungsverfahren, umfassend:

Empfangen (401) von ersten Konfigurationsinformationen in einem Endgerät und Ermitteln, aufgrund der ersten Konfigurationsinformationen, dass mehrere Zeiteinheiten verwendet werden, um einen Downlink-Datenkanal in mindestens einem Träger zu übertragen; und Empfangen (402) von ersten Downlink-Steuerinformationen in dem Endgerät, wobei die ersten Downlink-Steuerinformationen erste Anzeigeinformationen und zweite Anzeigeinformationen mitführen, wobei die ersten Anzeigeinformationen, die einem Zählerwert eines Downlink-Zuweisungsindikators (Downlink Assignment Indicator, DAI) entsprechen, verwendet werden, um eine akkumulierte Anzahl von in dem Endgerät empfangenen Downlink-Datenkanälen anzuzeigen, die unterschiedliche Dateninhalte aufweisen, und wobei die zweiten Anzeigeinformationen, die einem Gesamt-DAI entsprechen, verwendet werden, um eine Gesamtanzahl von in dem Endgerät empfangenen Downlink-Datenkanälen anzuzeigen, die unterschiedliche Dateninhalte aufweisen; Übertragen, durch das Endgerät, in einer Multiplexmethode über einen physischen Kanal, von Rückmeldeantwortinformationen, die den Downlink-Datenkanälen entsprechen, die unterschiedliche Dateninhalte aufweisen, wobei die Rückmeldeantwortinformationen ACK/NACK sind;

wobei das Verwenden der ersten Anzeigeinformationen, um eine akkumulierte Anzahl von in dem Endgerät empfangenen Downlink-Datenkanälen anzuzeigen, die unterschiedliche Dateninhalte aufweisen, umfasst, dass:

die ersten Anzeigeinformationen verwendet werden, um eine akkumulierte Anzahl von in dem Endgerät empfangenen Downlink-Datenkanälen anzuzeigen, die unterschiedliche Transportblöcke, TBs, mitführen, wobei mehrere Downlink-Datenkanäle, über die ein gleicher TB übertragen wird, den gleichen ersten Anzeigeinformationen entsprechen,
wobei das Verwenden der zweiten Anzeigeinformationen, um eine Gesamtanzahl von in dem Endgerät empfangenen Downlink-Datenkanälen anzuzeigen, die unterschiedliche Dateninhalte aufweisen, umfasst, dass:

die zweiten Anzeigeinformationen verwendet werden, um eine Gesamtanzahl von in dem Endgerät empfangenen Downlink-Datenkanälen anzuzeigen, die unterschiedliche TBs mitführen, wobei mehrere Downlink-Datenkanäle, über die ein gleicher TB übertragen wird, für die Gesamtanzahl, die durch die zweiten Anzeigeinformationen angezeigt wird, nur einmal gezählt werden; oder
wobei das Verwenden der ersten Anzeigeinformationen, um eine akkumulierte Anzahl von in dem Endgerät empfangenen Downlink-Datenkanälen anzuzeigen, die unterschiedliche Dateninhalte aufweisen, umfasst, dass:

die ersten Anzeigeinformationen verwendet werden, um eine akkumulierte Anzahl von in dem Endgerät empfangenen Downlink-Datenkanälen anzuzeigen, die unterschiedlichen hybriden automatischen Wiederholungsanforderungsprozessen (Hybrid Automatic Repeat Request processes, HARQ-Prozessen) entsprechen, wobei mehrere Downlink-Datenkanäle, die einem gleichen HARQ-Prozess entsprechen, den gleichen ersten Anzeigeinformationen entsprechen,
wobei das Verwenden der zweiten Anzeigeinformationen, um eine Gesamtanzahl von in dem Endgerät empfangenen Downlink-Datenkanälen anzuzeigen, die unterschiedliche Dateninhalte aufweisen, umfasst, dass:

die zweiten Anzeigeinformationen verwendet werden, um eine Gesamtanzahl von in dem Endgerät empfangenen Downlink-Datenkanälen anzuzeigen, die unterschiedlichen HARQ-Prozessen entsprechen, wobei mehrere Downlink-Datenkanäle, die einem gleichen HARQ-Prozess entsprechen, für die Gesamtanzahl, die durch die zweiten Anzeigeinformationen angezeigt wird, nur einmal gezählt werden.

2. Informationsübertragungsvorrichtung, umfassend:

eine erste Empfangseinheit (701), die konfiguriert ist zum Empfangen von ersten Konfigurationsinformationen, und zum Ermitteln, aufgrund der ersten Konfigurationsinformationen, dass mehrere Zeiteinheiten verwendet werden, um einen Downlink-Datenkanal in mindestens einem Träger zu übertragen; und eine zweite Empfangseinheit (702), die konfiguriert ist zum Empfangen von ersten Downlink-Steuerinformationen, wobei die ersten Downlink-Steuerinformationen erste Anzeigeinformationen und zweite Anzeigeinformationen mitführen, wobei die ersten Anzeigeinformationen, die einem Zählerwert eines Downlink-Zuweisungsindikators (Downlink Assignment Indicator, DAI) entsprechen, verwendet werden, um eine akkumulierte Anzahl von in einem Endgerät empfangenen Downlink-Datenkanälen anzuzeigen, die unterschiedliche Dateninhalte aufweisen, und wobei die zweiten Anzeigeinformationen, die einem Gesamt-DAI entsprechen, verwendet werden, um eine Gesamtanzahl von in dem Endgerät empfangenen Downlink-Datenkanälen anzuzeigen, die unterschiedliche Dateninhalte aufweisen, und wobei Rückmeldeantwortinformationen, die den Downlink-Datenkanälen entsprechen, die unterschiedliche Dateninhalte aufweisen, in einer Multiplexmethode über einen physischen Kanal übertragen werden, wobei die Rückmeldeantwortinformationen ACK/NACK sind;
wobei das Verwenden der ersten Anzeigeinformationen, um eine akkumulierte Anzahl von in dem Endgerät empfangenen Downlink-Datenkanälen anzuzeigen, die unterschiedliche Dateninhalte aufweisen, umfasst, dass:

die ersten Anzeigeinformationen verwendet werden, um eine akkumulierte Anzahl von in dem Endgerät empfangenen Downlink-Datenkanälen anzuzeigen, die unterschiedliche Transportblöcke, TBs, mitführen, wobei mehrere Downlink-Datenkanäle, über die ein gleicher TB übertragen wird, den gleichen ersten Anzeigeinformationen entsprechen,
wobei das Verwenden der zweiten Anzeigeinformationen, um eine Gesamtanzahl von in dem Endgerät empfangenen Downlink-Datenkanälen anzuzeigen, die unterschiedliche Dateninhalte aufweisen, umfasst, dass:

die zweiten Anzeigeinformationen verwendet werden, um eine Gesamtanzahl von in dem Endgerät empfangenen Downlink-Datenkanälen anzuzeigen, die unterschiedliche TBs mitführen, wobei mehrere Downlink-Datenkanäle, über die ein gleicher TB übertragen wird, für die Gesamtanzahl, die durch die zweiten Anzeigeinformationen angezeigt wird, nur einmal gezählt werden; oder
wobei das Verwenden der ersten Anzeigeinformationen, um eine akkumulierte Anzahl von in dem Endgerät empfangenen Downlink-Datenkanälen anzuzeigen, die unterschiedliche Dateninhalte aufweisen, umfasst, dass:

die ersten Anzeigeinformationen verwendet werden, um eine akkumulierte Anzahl von in dem Endgerät empfangenen Downlink-Datenkanälen anzuzeigen, die unterschiedlichen hybriden automatischen Wiederholungsanforderungsprozessen (Hybrid Automatic Repeat Request processes, HARQ-Prozessen) entsprechen, wobei mehrere Downlink-Datenkanäle, die einem gleichen HARQ-Prozess entsprechen, den gleichen ersten Anzeigeinformationen entsprechen,
wobei das Verwenden der zweiten Anzeigeinformationen, um eine Gesamtanzahl von in dem Endgerät empfangenen Downlink-Datenkanälen anzuzeigen, die unterschiedliche Dateninhalte aufweisen, umfasst, dass:
die zweiten Anzeigeinformationen verwendet werden, um eine Gesamtanzahl von in dem Endgerät empfangenen Downlink-Datenkanälen anzuzeigen, die unterschiedlichen HARQ-Prozessen entsprechen, wobei mehrere Downlink-Datenkanäle, die einem gleichen HARQ-Prozess entsprechen, für die Gesamtanzahl, die durch die zweiten Anzeigeinformationen angezeigt wird, nur einmal gezählt werden.

3. Vorrichtung nach Anspruch 2, wobei der Downlink-Datenkanal durch eine Zielressourceneinheit übertragen wird, die durch Trägerinformationen und Informationen über einen Downlink-Kanalüberwachungsanlass ermittelt werden.

4. Vorrichtung nach Anspruch 3, wobei mindestens eine der Trägerinformationen und der Informationen über einen Downlink-Kanalüberwachungsanlass, die verschiedenen Downlink-Datenkanälen entsprechen, unterschiedlich sind.

**Revendications**

1. Procédé de transmission d'informations, comprenant de :

recevoir (401), par un terminal, de premières informations de configuration, et déterminer, sur la base des premières informations de configuration, que de multiples unités de temps sont utilisées pour transmettre un canal de données de liaison descendante dans au moins une porteuse ; et
recevoir (402), par le terminal, de premières informations de commande de liaison descendante, dans lequel les premières informations de commande de liaison descendante contiennent de premières informations d'indication et de secondes informations d'indication, dans lequel les premières informations d'indication correspondant à un indicateur d'affectation de liaison descendante, DAI, de comptage sont utilisées pour indiquer un nombre cumulé de canaux de données de liaison descendante reçus par le terminal qui ont un contenu de données différent, et les secondes informations d'indication correspondant à un DAI total sont utilisées pour indiquer un nombre total de canaux de données de liaison descendante reçus par le terminal qui ont un contenu de données différent ;
transmettre, par le terminal, de manière multiplexée sur un canal physique, des informations de réponse de rétroaction correspondant aux canaux de données de liaison descendante ayant un contenu de données différent, dans lequel les informations de réponse de rétroaction sont un ACK/NACK ;
dans lequel le fait que les premières informations d'indication soient utilisées pour indiquer un nombre cumulé de canaux de données de liaison descendante reçus par le terminal qui ont un contenu de données différent, comprend le fait que :

les premières informations d'indication sont utilisées pour indiquer un nombre cumulé de canaux de données de liaison descendante reçus par le terminal qui transportent différents blocs de transport, TB, dans lequel de multiples canaux de données de liaison descendante sur lesquels un même TB est transmis correspondent aux mêmes premières informations d'indication ;
dans lequel le fait que les secondes informations d'indication sont utilisées pour indiquer un nombre total de canaux de données de liaison descendante reçus par le terminal qui ont un contenu de données différent comprend le fait que :

les secondes informations d'indication sont utilisées pour indiquer un nombre total de canaux de données de liaison descendante reçus par le terminal qui transportent différents TB, dans lequel pour le nombre total indiqué par les secondes informations d'indication, de multiples canaux de données de liaison descendante sur lesquels un même TB est transmis sont comptés une seule fois ; ou
dans lequel le fait que les premières informations d'indication sont utilisées pour indiquer un nombre cumulé de canaux de données de liaison descendante reçus par le terminal qui ont un contenu de données différent, comprend le fait que :

les premières informations d'indication sont utilisées pour indiquer un nombre cumulé de canaux de données de liaison descendante reçus par le terminal qui correspondent à différents processus de demande de répétition automatique hybride, HARQ, dans lequel de multiples canaux de données de liaison descendante correspondant à un même processus HARQ correspondent aux mêmes premières informations d'indication ;
dans lequel le fait que les secondes informations d'indication sont utilisées pour indiquer un nombre total de canaux de données de liaison descendante reçus par le terminal qui ont un contenu de données différent comprend le fait que :

les secondes informations d'indication sont utilisées pour indiquer un nombre total de canaux de données de liaison descendante reçus par le terminal qui correspondent à différents processus HARQ, dans lequel, pour le nombre total indiqué par les secondes informations d'indication, de multiples canaux de données de liaison descendante correspondant à un même processus HARQ sont comptés une seule fois.

2. Appareil de transmission d'informations, comprenant :

une première unité de réception (701), configurée pour recevoir de premières informations de configuration, et déterminer, sur la base des premières informations de configuration, que de multiples unités de temps sont utilisées pour transmettre un canal de données de liaison descendante dans au moins une porteuse; et une seconde unité de réception (702), configurée pour recevoir de premières informations de commande de liaison descendante, dans lequel les premières informations de commande de liaison descendante contiennent de premières informations d'indication et de secondes informations d'indication, dans lequel les premières informations d'indication correspondant à un indicateur d'affectation de liaison descendante, DAI, de comptage sont utilisées pour indiquer un nombre cumulé de canaux de données de liaison descendante reçus par un terminal qui ont un contenu de données différent, et les secondes informations d'indication correspondant à un DAI total sont utilisées pour indiquer un nombre total de canaux de données de liaison descendante reçus par le terminal qui ont un contenu de données différent, et dans lequel des informations de réponse de rétroaction correspondant aux canaux de données de liaison descendante ayant un contenu de données différent sont transmises d'une manière multiplexée sur un seul canal physique, dans lequel les informations de réponse de rétroaction sont un ACK/NACK; dans lequel le fait que les premières informations d'indication sont utilisées pour indiquer un nombre cumulé de canaux de données de liaison descendante reçus par le terminal qui ont un contenu de données différent, comprend le fait que :

les premières informations d'indication sont utilisées pour indiquer un nombre cumulé de canaux de données de liaison descendante reçus par le terminal qui transportent différents blocs de transport, TB, dans lequel de multiples canaux de données de liaison descendante sur lesquels un même TB est transmis correspondent aux mêmes premières informations d'indication; dans lequel le fait que les secondes informations d'indication sont utilisées pour indiquer un nombre total de canaux de données de liaison descendante reçus par le terminal qui ont un contenu de données différent comprend le fait que :

les secondes informations d'indication sont utilisées pour indiquer un nombre total de canaux de données de liaison descendante reçus par le terminal qui transportent différents TB, dans lequel pour le nombre total indiqué par les secondes informations d'indication, de multiples canaux de données de liaison descendante sur lesquels un même TB est transmis sont comptés une seule fois; ou dans lequel le fait que les premières informations d'indication sont utilisées pour indiquer un nombre cumulé de canaux de données de liaison descendante reçus par le terminal qui ont un contenu de données différent, comprend le fait que :

les premières informations d'indication sont utilisées pour indiquer un nombre cumulé de canaux de données de liaison descendante reçus par le terminal qui correspondent à différents processus de demande de répétition automatique hybride, HARQ, dans lequel de multiples canaux de données de liaison descendante correspondant à un même processus HARQ correspondent aux mêmes premières informations d'indication; dans lequel le fait que les secondes informations d'indication sont utilisées pour indiquer un nombre total de canaux de données de liaison descendante reçus par le terminal qui ont un contenu de données différent comprend le fait que :
les secondes informations d'indication sont utilisées pour indiquer un nombre total de canaux de données de liaison descendante reçus par le terminal qui correspondent à différents processus HARQ, dans lequel, pour le nombre total indiqué par les secondes informations d'indication, de multiples canaux de données de liaison descendante correspondant à un même processus HARQ sont comptés une seule fois.

3. Appareil selon la revendication 2, dans lequel le canal de données de liaison descendante est transmis par une unité de ressource cible qui est déterminée par des informations de porteuse et des informations d'occasion de surveillance de canal de liaison descendante.

4. Appareil selon la revendication 3, dans lequel au moins l'une des informations de porteuse et des informations d'occasion de surveillance de canal de liaison descendante correspondant à différents canaux de données de liaison descendante est différente.

**100**

FIG.1

FIG. 2

CC1
$N_{PDSCH}^{repeat} = 1$

CC2
$N_{PDSCH}^{repeat} = 8$

DAI=00
DAI=00

DAI=00
DAI=00

☐ DL    ■ UL    ▨ PDSCH

FIG. 3

| A terminal receives first configuration information, and determines, based on the first configuration information, that multiple time units are used to transmit one downlink data channel in at least one carrier | 401 |

| The terminal receives first downlink control information, where the first downlink control information carries first indication information and/or second indication information, where the first indication information is used to indicate an accumulative number of downlink data channels received by the terminal that have different data content and/or an accumulative number of downlink control information DCI indicating downlink SPS resource release, and the second indication information is used to indicate a total number of downlink data channels received by the terminal that have different data content and/or a total number of DCI indicating downlink SPS resource release, and where feedback response information corresponding to the downlink data channels having different data content and/or the DCI indicating the downlink SPS resource release is transmitted in a multiplexed manner over one physical channel | 402 |

FIG. 4

CC1
$N_{PDSCH}^{repeat} = 1$

| DAI$_C$=1 | | DAI$_C$=2 | DAI$_C$=3 | | | |
| DAI$_T$=1 | | DAI$_T$=2 | DAI$_T$=3 | | | |

CC2
$N_{PDSCH}^{repeat} = 4$

| | DAI$_C$=1 | | | | |
| | DAI$_T$=1 | | | | |

☐ DL  ■ UL  ▨ PDSCH

FIG. 5

| A network device transmits first configuration information, where the first configuration information is used by a terminal to determine that multiple time units are used to transmit one downlink data channel in at least one carrier | 601 |

| The network device transmits first downlink control information, where the first downlink control information carries first indication information being used to indicate an accumulative number of downlink data channels received by the terminal that have different data content and/or an accumulative number of DCI indicating downlink SPS resource release, and/or second indication information being used to indicate a total number of downlink data channels received by the terminal that have different data content and/or a total number of DCI indicating downlink SPS resource release, and where feedback response information corresponding to the downlink data channels having different data content and/or the DCI indicating the downlink SPS resource release is transmitted in a multiplexed manner over one physical channel | 602 |

FIG. 6

Information transmission apparatus

First receiving unit 701

Second receiving unit 702

FIG. 7

Information transmission apparatus

First transmitting unit 801

Second transmitting unit 802

FIG. 8

EP 3 648 391 B1

FIG. 9

FIG. 10

23

Communication system  900

| | |
|---|---|
| Terminal | Network device |

910

920

FIG. 11